# EUROPEAN PATENT APPLICATION

(11) **EP 0 984 605 A2**
(43) Date of publication of application: **08.03.2000**
(21) Application number: 99306655.4
(22) Date of filing: 23.08.1999
(51) Int. Cl.: H04M 1/00, H04M 1/72, H04M 1/56, H04M 1/57

(54) **Telephone status information for customer premises equipment**

(30) Priority: 31.08.1998 US 144100
(71) Applicant: LUCENT TECHNOLOGIES INC., Murray Hill, New Jersey 07974-0636 (US)
(72) Inventor: Ali, Seyd S., Allentown, Pennsylvania 18104 (US); Cannon, Joseph M., Harleysville, Pennsylvania 19438 (US); Johanson, James A., Mucungie, Pennsylvania 18062 (US); Popa, James C., Allentown, Pennsylvania 18104 (US)
(74) Representative: Watts, Christopher Malcolm Kelway, Dr.

(57) **Abstract**

Telephone equipment which monitors and/or displays status information relating to a current, last or past telephone call at any telephone or other customer premises equipment utilizing the same telephone line. A phone status display (PSD) displays phone status information as well as call related information regarding incoming calls, e.g., Caller ID information. The status information may include, e.g., whether a telephone call was an incoming or outgoing telephone call, the date, start and elapsed time of the call, and/or the distance of the telephone call (e.g., local or long distance), as well as conventional Caller ID information. The phone status display may be integrated into a telephone, or may be a separate device connected to the same telephone line as a telephone to monitor activity of the use of the telephone line by the telephone(s) connected thereto.

## Description

### Field of the Invention

This invention relates generally to telephonic customer premises equipment. More particularly, it relates to the display of status information regarding a telephone line at on- or off-hook customer premises equipment.

### Background of Related Art

Telephones have become an essential part of our society. Virtually every home and office contains at least one telephone. In fact, telephones and other customer premises equipment such as FAX machines have become so prevalent that many homes and offices have telephone lines with more than one telephone or other customer premises equipment utilizing the same telephone line.

In a home or office wherein a plurality of telephones are disbursed throughout separate rooms, it is often difficult to determine whether or not the telephone line is in use from any of the telephones without picking up an unused telephone and listening. This technique interrupts those already engaged in conversation using the telephone line and causes an invasion of the privacy of those using the telephone.

Moreover, even more difficult than determining whether or not a telephone line is in use is determining either the length of the call made from another telephone (without repeatedly picking up an unused telephone) or the point at which the telephone line becomes available. Furthermore, the amount of use of a telephone by a minor at their own private extension and/or who they are speaking with and other status information cannot be determined using conventional customer premises equipment.

There is thus a need for telephone equipment which allows a telephone line to be usefully and/or non-invasively monitored either by the telephone equipment actively engaged in use of the telephone line or by other telephone equipment connected to the same telephone line.

### Summary Of The Invention

In accordance with the principles of the present invention, a phone status display device comprises a high impedance monitoring circuit to monitor a status of a telephone call utilizing a telephone line. A display indicates either a direction of the telephone call utilizing the telephone line, a distance between parties engaged in the telephone call, or an elapsed time of the telephone call utilizing the telephone line.

In another aspect of the present invention, a phone status display device comprises a high impedance monitoring circuit to monitor a status of a telephone call utilizing a telephone line. An indicator is adapted to indicate that another device in communication with the telephone line is off-hook while the phone status display device is on-hook.

A method of indicating a status of a telephone call utilizing a telephone line in accordance with the principles of the present invention comprises monitoring a status of the telephone call engaging a first, off-hook device with a second, on-hook device. A status of the telephone call engaging the first device is displayed at the second device.

Another method of indicating a status of a telephone call utilizing a telephone line comprises detecting, at a first device in communication with a telephone line, DTMF tones on the telephone line provided by a second device in communication with the telephone line. The DTMF tones are decoded to determine a telephone number dialed from the second device, and the dialed telephone number is displayed at the first device.

### Brief Description Of The Drawings

Features and advantages of the present invention will become apparent to those skilled in the art from the following description with reference to the drawings, in which:

Fig. 1 is a block diagram of a customer premises equipment which is capable of displaying current status of a telephone call with the equipment in accordance with an embodiment of the present invention.

Fig. 2 is a perspective view of a customer premises equipment including a display for displaying the current status of a telephone call with the equipment in accordance with the principles of the present invention.

Fig. 3 is a flow diagram showing steps of displaying the status of an incoming call at the customer premises equipment which is used to answer the incoming call.

Fig. 4 is a flow diagram showing steps of displaying the status of an outgoing call made from the customer premises equipment.

Fig. 5A is a block diagram showing two customer premises equipment capable of operation with a telephone call together with a phone status display all utilizing the same telephone line in accordance with another embodiment of the present invention.

Fig. 5B is a perspective view showing an exemplary phone status display shown in Fig. 5A.

Fig. 6 is a flow diagram showing steps of displaying the status of an incoming call at a monitoring phone status display shown in Figs. 5A and 5B.

Fig. 7 is a flow diagram showing steps of displaying the status of an outgoing call made from other equipment as monitored at a phone status display shown in Figs. 5A and 5B.

### Detailed Description Of Illustrative Embodiments

The present invention relates to customer premises equipment which monitors and/or displays status information relating to a current, last or past telephone call. The specific embodiments disclosed relate to a digital telephone, but the principles of the present invention relate equally to other customer premises equipment or devices which connect to a telephone line.

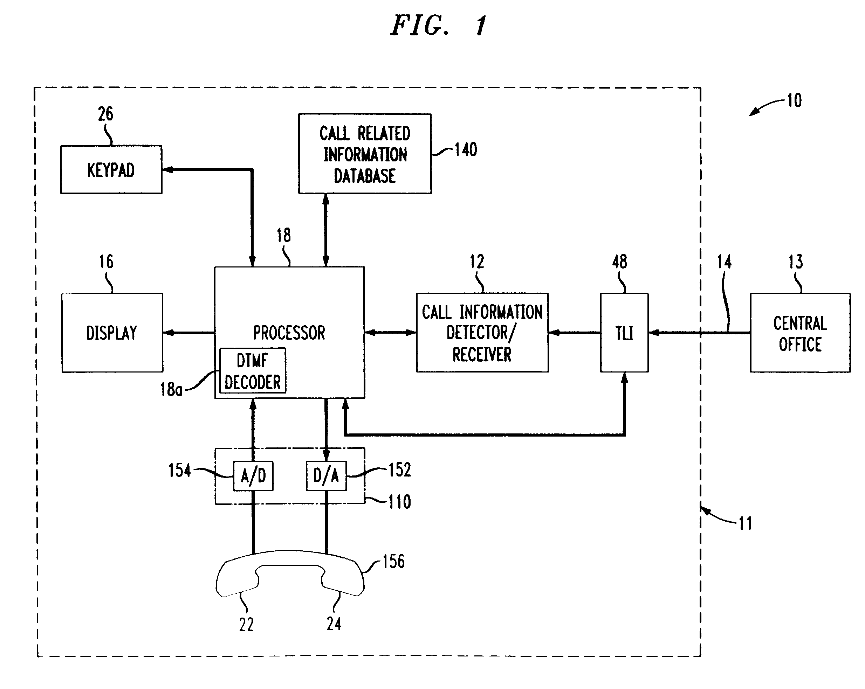

With reference to **FIG. 1**, customer premises equipment, generally indicated at **10**, includes a telephone **11** having a call information detector/receiver circuit **12** which receives call related information from a central office **13** over a telephone line **14** via a telephone line interface (TLI) **48**. The telephone **11** includes a controller or processor **18** (e.g., a digital signal processor (DSP), microprocessor, or microcontroller) in communication with a voice module **110**. The telephone **11** interfaces with a telephone line **14** from a central office **13** via a conventional telephone line interface (TLI) **48**.

The voice module **110** includes an analog-to-digital (A/D) converter, a digital-to-analog (D/A) converter, and a handset **156** including a microphone **22** and a speaker **24**. Although the telephone **11** disclosed is a digital telephone, the invention is equally applicable to analog telephones. Thus. a conventional voice module for an analog telephone (not shown) may alternatively be used, e.g., including analog components to interface directly between the TLI **48** and the handset **156**.

A standard 12- or 16-key keypad **26** allows a user to input dialed telephone numbers and to input alphanumeric information for storage and/or use by the processor **18**.

Conventional telephones are now capable of receiving and displaying call related information, e.g., Caller ID information associated with an incoming call. Using Caller ID, a caller's telephone number and/or household name is transmitted by the telephone company to the voice messaging machine. Using Type I service, Caller ID information is transmitted, e.g., during the silent interval between the first two rings to a telephone in an on-hook condition. Type II customer premises equipment (CPE) receives Caller ID information in an off-hook condition, e.g., Caller ID Call Waiting (CIDCW). Of course, other standards exist, e.g., in the United Kingdom a standard exists wherein the call related information is transmitted prior to the first ring, all of which are applicable to the present invention.

The telephone **11** includes the capability to receive Caller ID information or other call related information and to store the same in a call related information database **140**. The call related information database **140** stores call related information, e.g., Caller ID information, either input manually by the user or as detected and received by the call information detector/receiver **12** and processed by the processor **18**. The user may manually input the call related information using, e.g., the keypad **26** or other keys, or may cause call related information received by the call information detector/receiver **12** to be stored in the call related information database **140** either automatically for each incoming call, by the selection of a predetermined code input into the keypad **26**, or by activation of a dedicated key. The call related information is made available to the processor **18** for display on a phone status display (PSD) **16** and/or for storage in the call related information database **140**.

The processor **18** may be any appropriate processor, e.g., a microprocessor, a digital signal processor, or a microcontroller. The processor **18** includes a dual tone multi frequency (DTMF) decoder **18a** to, e.g., detect touch tone control signals on the telephone line **14** relating to an incoming call, i.e., dialed touch tone telephone numbers from another telephone or other customer premises equipment in communication with the same telephone line **14**. The DTMF decoder **18a** may either be one or more software modules which perform DTMF detection and decoding in the processor **18**, or may be a device separate from the processor **18**.

The processor **18** can distinguish three states during a call: voice signals, DTMF signals, and dial tone or silence, by reading the level and modulation of the signals on the telephone line **14**. The processor **18** can distinguish between the tones of DTMF signals and the signal level ranges associated with human speech detected on the telephone line **14**. If no voice is present on the telephone line **14**, but DTMF signals are being transmitted, the processor **18** executes the DTMF decoder routine **18a** to detect the presence of dialed telephone digits over the telephone line **14** by another telephone or other customer premises equipment. If a separate customer premises equipment unit is provided, a high impedance circuit with appropriate logic will preferably sense an off-hook condition, and then enter a DTMF decode mode. At this point all timers preferably begin irregardless of call connection.

Call related information such as, for example, a telephone number, area code, household name, time of call, private "P", out of area "O", and/or anonymous "A" information associated with the incoming call may be stored by the processor **18** into the call related information database **140**. The call related information database **140** may be internal or external to the processor **18**, and may be comprised of non-volatile memory such as Flash memory, or may comprise magnetic media such as a hard or floppy disk.

A phone status display **16** displays phone status information in accordance with the present invention. For instance, the phone status display **16** may display information relating to a current, last and/or past telephone call, either made at the telephone in use or from another telephone connected to the same telephone line **14**.

The phone status display **16** may be co-located with the telephone in use connected to the telephone line **14**, or may be remote therefrom. For instance, the phone status display **16** may be a computer monitor of a personal computer interfaced with the processor **18** of the telephone **11** via, e.g., a serial interface.

The displayed phone status information may include, e.g., whether the current, last or past telephone call is an incoming call or an outgoing call.

The phone status display **16** may additionally or alternatively display the time that the current, last or past call was initiated. The phone status display **16** may also provide an indication as to the total elapsed time of a last or past call, or an elapsed time timer for a current call.

Additional or alternative status information which may be displayed includes whether the current, last or past telephone call is local or long distance.

Of course, the phone status display **16** may additionally indicate conventional call related information such as Caller ID information. Additionally, if toll amounts are made available, e.g., with Caller ID information, the cost of the call can be displayed.

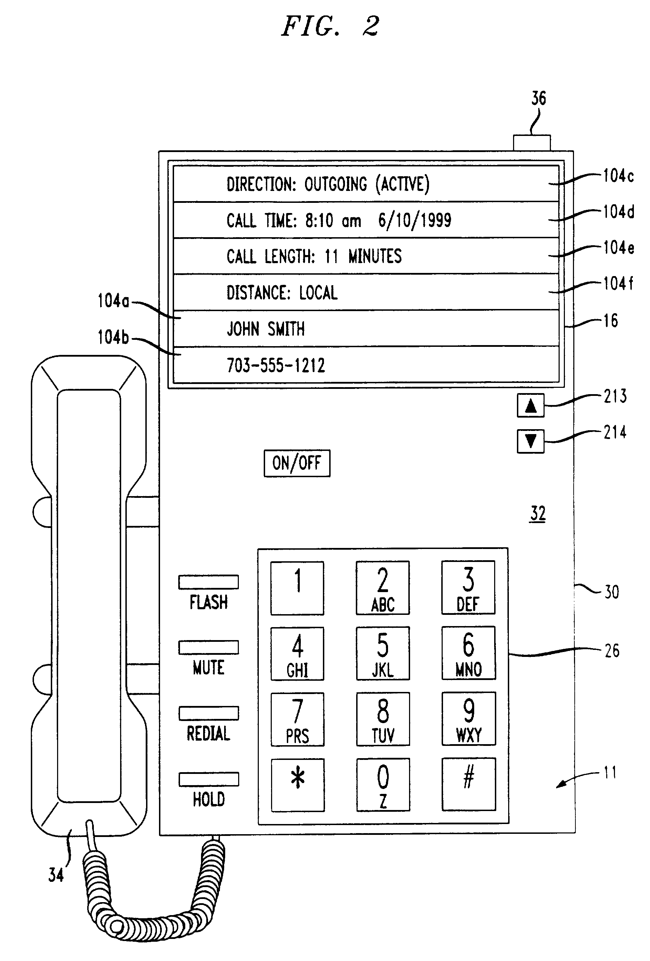

Fig. 2 shows an embodiment of the physical packaging of a telephone **11** in accordance with the principles of the present invention.

In particular, the telephone **11** may be packaged to fit within a console **30** which includes a control panel **32**. The console **30** may be equipped with a standard handset **34** and a phone jack **36** which can be plugged into any standard telephone company modular jack, e.g., an RJ-11 jack. The control panel **32** includes a liquid crystal display (LCD) forming the phone status display **16**, and the alpha-numeric keypad **26**.

The phone status display **16** displays phone status information as well as call related information regarding incoming calls, e.g., the telephone number and/or the household name associated with the incoming call. If there is no call related information relating to a particular incoming call, that portion of the phone status display **16** is left blank or otherwise indicates that status information and/or call related information is not available for that particular call or telephone line.

The phone status display **16** may be used to scroll through a log of past status information for calls received and/or placed from telephone equipment in communication with the telephone line **14** using scroll keys **213**, **214**. Call related information such as Caller ID information may also be displayed by the phone status display **16** and scrolled together with the status information using scroll keys **213, 214**.

Importantly, call related information displayable on the phone status display **16** as well as status information in accordance with the principles of the present invention relates to any call made or received on the same telephone line **14**, not just calls made or received from the particular telephone including the phone status display **16**. Thus, in accordance with the principles of the present invention, status information such as the direction, time, duration and distance of calls made or received at other telephones utilizing the same telephone line **14** may be remotely monitored and/or logged.

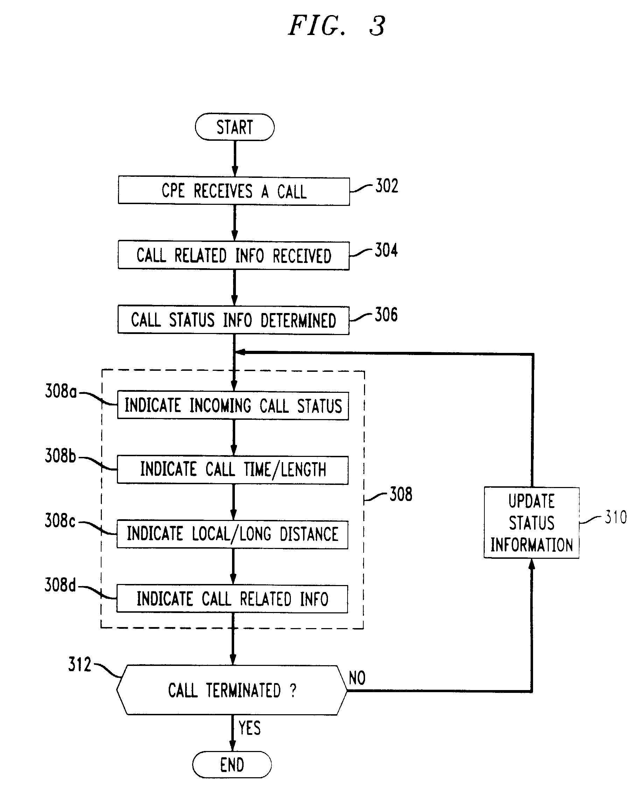

Fig. 3 shows a flow chart of a call received at a telephone including a phone status display **16** as shown in Figs. 1 and 2, and Fig. 4 shows a flow chart of a call initiated or placed from a telephone including the phone status display **16**, in accordance with the principles of the present invention.

In particular, in Fig. 3, a customer premises equipment receives a call in step **302**. In step **304**, call related information such as caller ID information is received, e.g., by the call information detector/receiver **12** and processor **18** shown in Fig. 1.

In step **306**, status information regarding a current, last or past telephone call utilizing the telephone line is determined, and in step **308** the status information is generally stored in local memory and/or displayed. The status information may include, e.g., an indication that the telephone call was an incoming telephone call as shown in step **308a**. The status information may also or alternatively indicate the time of the telephone call and/or the length of the call as shown in step **308b**. The distance of the telephone call such as whether or not the telephone call is a local telephone call or long distance telephone call may be indicated as shown in step **308c**. The distance in the disclosed embodiment is determined based on received call information, e.g., from the area code of the telephone number calling customer premises equipment. However, the distance of the call may be more sophisticated and include an approximate physical distance between the two relevant central offices handling the telephone call.

In step **308d**, conventional call information such as caller ID may be indicated.

The phone status information displayed in step **308** may additionally or alternatively be written to a database such as the call related information database **140** shown in Fig. 1 for later use. The later uses of the call related information database **140** include simple scrolling through call related information regarding past telephone calls to the determination of a household name associated with a given (i.e., detected) telephone number.

In step **312**, the customer premises equipment determines when the current telephone call is terminated. If the current telephone call is not terminated, then the telephone status information displayed in step **308** is updated in step **310**, and re-displayed and/or re-stored in a repeat of step **308**. If, on the other hand, the call is terminated, the process ends.

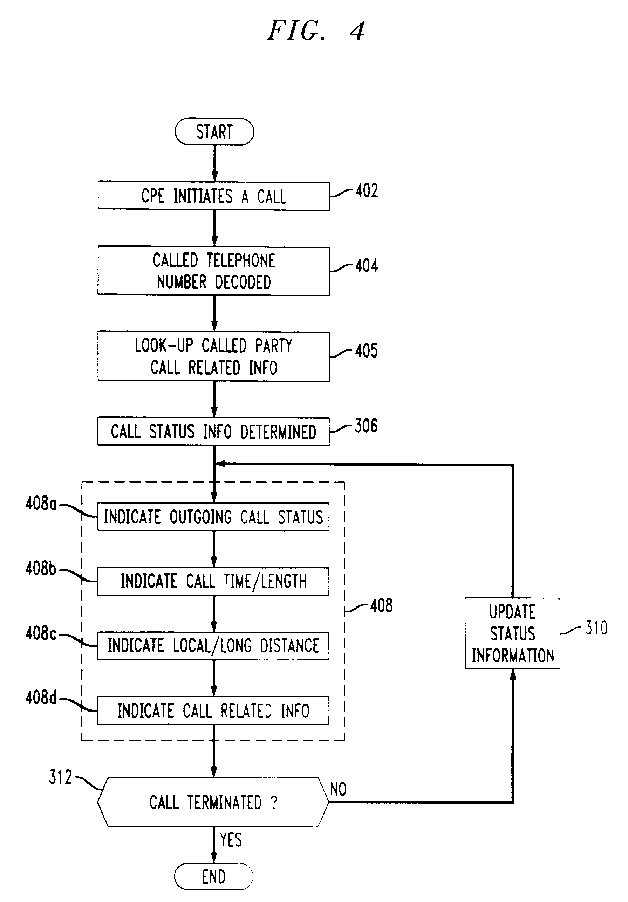

Fig. 4 is similar to Fig. 3 but shows the display and/or storage of phone status information relating to an outgoing telephone call rather than relating to a telephone call received by the users of the telephone line **14** as is shown in Fig. 3.

In particular, the customer premises equipment initiates a telephone call in step **402**, invoking the process shown in Fig. 4. The process shown in Fig. 4 may be automatically invoked by any telephone call on the telephone line **14**, or may be selectively requested by a user of the device including the phone status display **16**.

In step **404**, the telephone number dialed by the customer premises equipment is decoded into digital data for use by the processor **18** if necessary. For example, if the processor **18** has a direct indication of the dial telephone number as it would if the telephone number was dialed directly through the keypad **26**, then decoding of DTMF tones may not be necessary.

In step **405**, call related information relating to the telephone number decoded in step **404** may be looked up in a database such as the call related information database **140** shown in Fig. 1. In this way, the household name or other corollary call related information can be determined based only on the detected dialed telephone number.

Steps **306, 310** and **312** are substantially as described with respect to Fig. 3.

The display of telephone call status information as shown in step **408** of Fig. 4 is similar to the display of telephone call status information described with respect to step **308** of Fig. 3, with the exception that the telephone call status information in Fig. 4 relates to a telephone call initiated from a telephone at the telephone line **14** rather than to a telephone call received on the telephone line **14**. Thus, an indication of an outgoing telephone call rather than an incoming telephone call would be displayed in step **408a**. The time and length of the telephone call, the distance of the telephone call, and/or call related information relating to the telephone call may also or alternatively be displayed as shown respectively in steps **408b, 408c,** and **408d**.

In the embodiment described with respect to Figs. 3 and 4, the telephone call status information displayed relates to a telephone call received or initiated from the customer premises equipment including a phone status display in accordance with the principles of the present invention. However, the telephone status information indicated at the customer premises equipment may instead relate to a telephone call initiated by a telephone other than the customer premises equipment including the phone status display **16**.

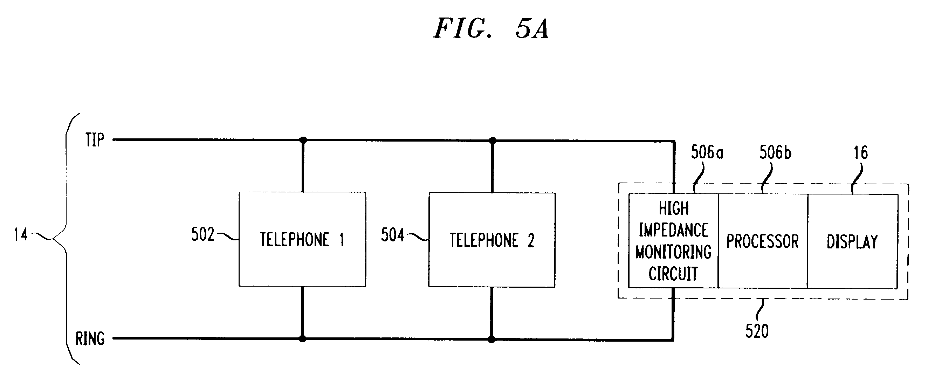

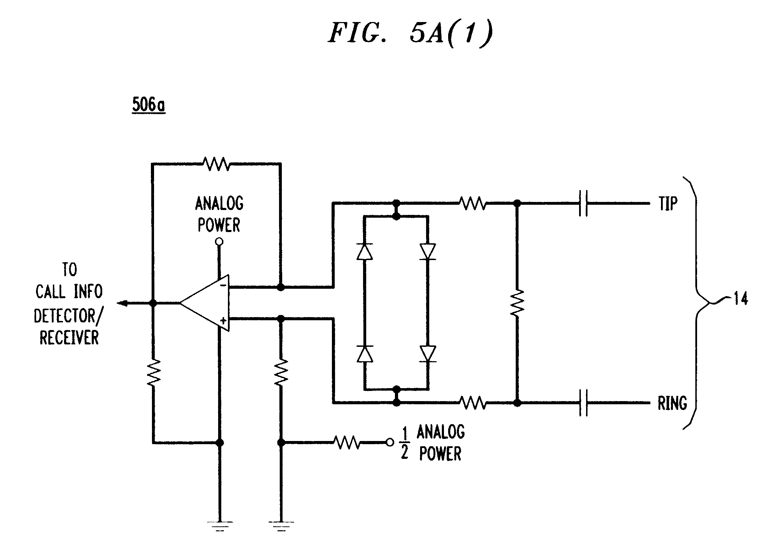

For instance, Fig. 5A shows a remote phone status display device **520** including a high impedance monitoring circuit **506a**. The high impedance monitoring circuit **506a** detects call status information with respect to either telephone **502** or **504** on the telephone line **14** without interfering with the normal operation of the telephone line **14**. Thus, the phone status display device **520** is sufficiently high in impedance so as to not cause an off-hock indication to the central office or other telephone device. An exemplary high impedance monitoring circuit **506a** is shown in Fig. 5A(1).

A processor **506b** includes a DTMF decoder to decode detected touch tone signals sensed on the telephone line **14** through the high impedance monitoring circuit **506a**. The phone status display device **520** further includes a phone status display **16** similar to that shown and described with respect to Figs. 1 and 2.

Thus, a phone status display device **520** may remotely and non-invasively monitor telephone activity made or received by any telephone in communication with the same telephone line. For instance, the phone status display device **520** may monitor a parallel telephone on a common telephone line to determine when the parallel telephone enters an off-hook condition. When such a condition is detected, the phone status display device **520** may monitor the telephone line for the presence of DTMF tones from the parallel telephone representing dialed digits of a telephone number. The phone status display device **520** may also monitor when the parallel telephone goes back on-hook to reduce unnecessary processing due to DTMF tone monitoring while the parallel telephone is on-hook.

The phone status display device **520** may also monitor incoming calls to receive call related information using frequency shift keying (FSK), e.g., Caller ID information with respect to an incoming call.

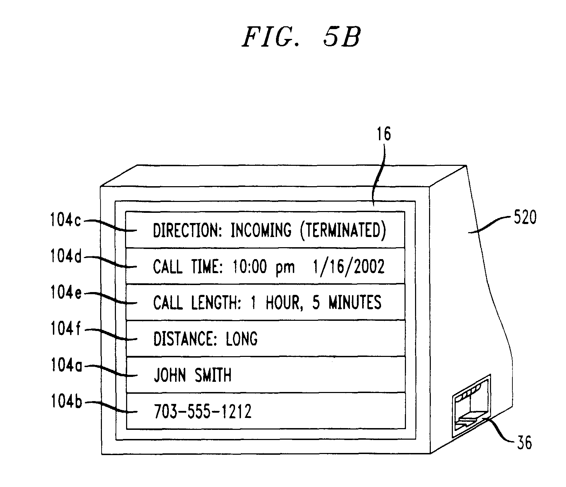

Fig. 5B is a perspective view showing an exemplary phone status display device **520**.

In particular, the phone status display device **520** includes a conventional telephone jack **36** such as an RJ-11 for interconnection with the telephone line **14**. The phone status display device **520** includes a processor **506b** (Fig. 5A) for converting analog signals such as touch tone signals received from the telephone line **14** into digital samples, which are decoded by a DTMF decoder routine into separate digits of a particular telephone number as they are dialed by a telephone or customer premises equipment in communication with the telephone line **14**.

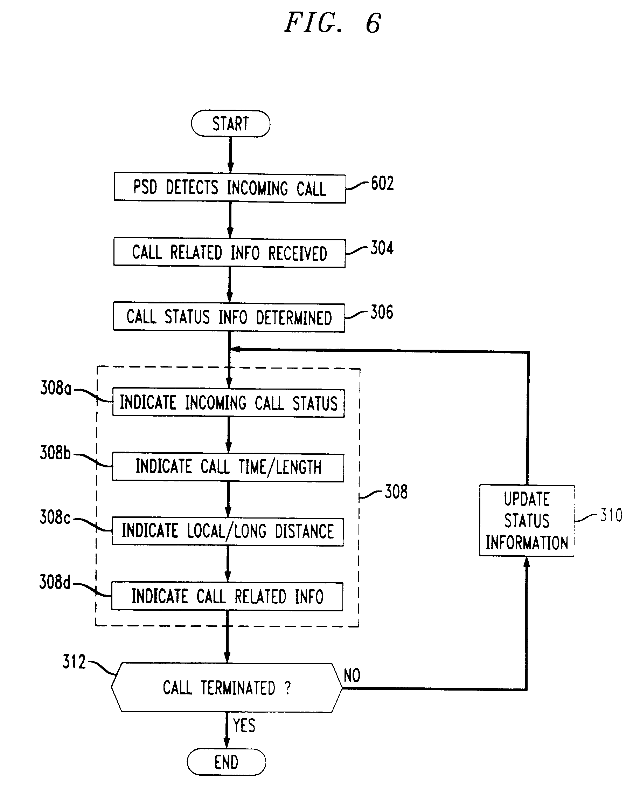

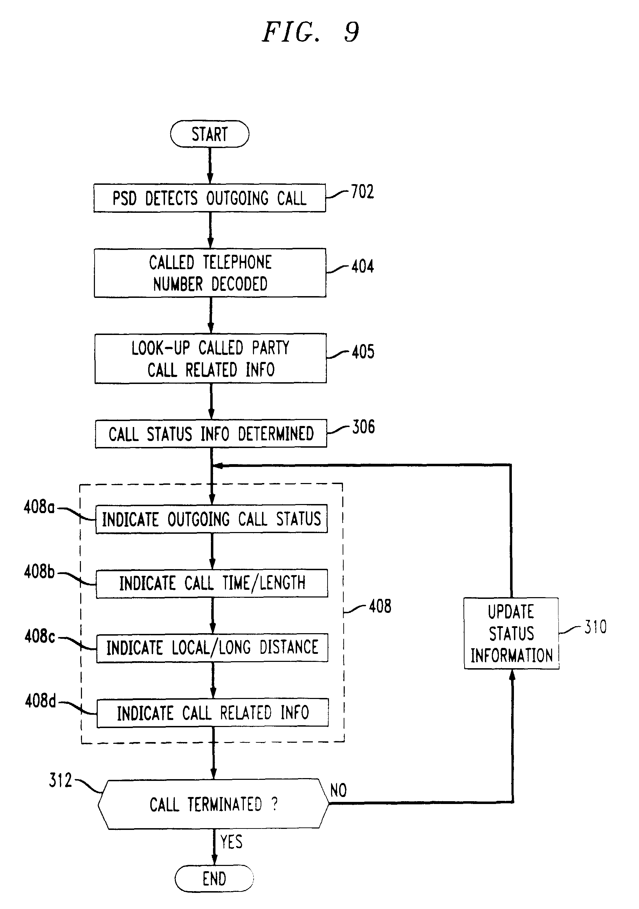

Fig. 6 is a flow diagram showing steps of monitoring telephone call status information at a phone status display device **520** regarding an incoming call to any telephone connected to a particular telephone line, and Fig. 7 is a flow diagram showing steps of monitoring telephone call status information regarding an outgoing telephone call from any telephone connected to the particular telephone line.

In particular, in step **602** the phone status display device **502** detects the ring signal of an incoming telephone call to any telephone connected to the same telephone line as the phone status display device **502**. The phone status display device **502** detects the incoming call either through the high impedance monitoring circuit **506a** such as that shown in Fig. 5A, or using a conventional ring detect circuit (not shown). Steps **304** to **312** shown in Fig. 6 are substantially as described with respect to Fig. 3.

Fig. 7 shows the display of telephone call status information monitored by a phone status display device **502** for an outgoing call from any telephone connected to the same telephone line as the phone status display device **502**. Thus, in step **702** the phone status display device **502** detects the digits of a telephone number as they are dialed from a telephone or other customer premises equipment on the common telephone line. The remaining steps shown in Fig. 7 are substantially and otherwise as described with respect to the similarly numbered steps shown in Fig. 4.

Accordingly, customer premises equipment in accordance with the principles of the present invention provides useful information in an effective way to monitor the status of a telephone line regardless of which customer premises equipment is or was actively engaged in a telephone call. The present invention is of particular use for monitoring the status of a telephone line from an inactive telephone connected to the telephone line. For instance, the invention is of particular use for non-invasively monitoring general information regarding the use of a telephone by a minor at another extension in a home without invading the minor's privacy by picking up and listening at another telephone on the telephone line.

## Claims

1. A phone status display device, comprising:
a high impedance monitoring circuit to monitor a status of a telephone call utilizing a telephone line; and
a display to indicate a direction of said telephone call utilizing said telephone line.

2. The phone status display device according to claim 1, wherein:
said high impedance monitoring circuit monitors said status of said telephone call utilizing said telephone line without itself causing said phone status display device to generate an off-hook condition.

3. The phone status display device according to claim 1, wherein:
said direction is one of incoming and outgoing.

4. The phone status display device according to claim 1, wherein:
said high impedance monitoring circuit is remote from a telephone adapted to engage in said telephone call utilizing said telephone line.

5. The phone status display device according to claim 1, further comprising:
an elapsed time indicator to indicate an elapsed time of said telephone call utilizing said telephone line.

6. The phone status display device according to claim 1, further comprising:
a distance indicator to indicate a distance between parties engaged in said telephone call.

7. A phone status display device, comprising:
a high impedance monitoring circuit to monitor a distance of a telephone call utilizing a telephone line; and
a distance indicator to indicate a distance between parties engaged in said telephone call.

8. The phone status display device according to claim 7, wherein:
said high impedance monitoring circuit is remote from a telephone adapted to engage in said telephone call utilizing said telephone line.

9. The phone status display device according to claim 7, further comprising:
an elapsed time indicator to indicate an elapsed time of said telephone call utilizing said telephone line.

10. The phone status display device according to claim 7, wherein:
said high impedance monitoring circuit monitors said status of said telephone call utilizing said telephone line without itself causing said phone status display device to generate an off-hook condition.

11. A phone status display device, comprising:
a high impedance monitoring circuit to monitor a status of a telephone call utilizing a telephone line; and
a display to indicate an elapsed time of said telephone call utilizing said telephone line.

12. The phone status display device according to claim 11, wherein:
said high impedance monitoring circuit monitors said status of said telephone call utilizing said telephone line without itself causing said phone status display device to generate an off-hook condition.

13. The phone status display device according to claim 11, wherein:
said high impedance monitoring circuit is remote from a telephone adapted to engage in said telephone call utilizing said telephone line.

14. A phone status display device, comprising:
a high impedance monitoring circuit to monitor a status of a telephone call utilizing a telephone line; and
an indicator adapted to indicate that another device in communication with said telephone line is off-hook while the phone status display device is on-hook.

15. The phone status display device according to claim 14, wherein:
said indicator includes a length of call indication.

16. The phone status display device according to claim 14, wherein:
said indicator includes a direction of call indication.

17. The phone status display device according to claim 14, wherein:
said indicator includes a distance of call indication.

18. A method of indicating a status of a telephone call utilizing a telephone line, said method comprising:
monitoring a status of said telephone call engaging a first, off-hook device with a second, on-hook device;
displaying a status of said telephone call engaging said first device at said second device.

19. The method of indicating a status of a telephone call utilizing a telephone line according to claim 18, wherein said step of monitoring includes:
monitoring said telephone line with a high impedance monitoring circuit.

20. A method of indicating a status of a telephone call utilizing a telephone line, said method comprising:
detecting, at a first device in communication with a telephone line, DTMF tones on said telephone line provided by a second device in communication with said telephone line;
decoding said DTMF tones to determine a telephone number dialed from said second device; and
displaying said dialed telephone number at said first device.

21. The method of indicating a status of a telephone call utilizing a telephone line according to claim 20, further comprising:
correlating said dialed telephone number with a database including call related information to determine a household name associated with said dialed telephone number.

22. The method of indicating a status of a telephone call utilizing a telephone line according to claim 21, further comprising:
displaying said determined household name at said first device.

23. Apparatus for indicating a status of a telephone call utilizing a telephone line, comprising:
means for detecting, at a first device in communication with a telephone line, DTMF tones on said telephone line provided by a second device in communication with said telephone line;
means for decoding said DTMF tones to determine a telephone number dialed from said second device; and
means for displaying said dialed telephone number at said first device.

24. The apparatus for indicating a status of a telephone call utilizing a telephone line according to claim 23, further comprising:
means for correlating said dialed telephone number with a database including call related information to determine a household name associated with said dialed telephone number.

25. The method of indicating a status of a telephone call utilizing a telephone line according to claim 24, further comprising:
means for displaying said determined household name at said first device.
